# EUROPEAN PATENT APPLICATION

(11) **EP 1 509 055 A2**
(43) Date of publication of application: **23.02.2005**
(21) Application number: 04019980.4
(22) Date of filing: 23.08.2004
(51) Int. Cl.: H04Q 7/38

(54) **Method of controlling reverse link in a mobile communication system**

(30) Priority: 21.08.2003 KR 2003058088; 03.09.2003 KR 2003061461
(71) Applicant: Samsung Electronics Co., Ltd., Suwon-si, Gyeonggi-do (KR)
(72) Inventor: Kwon, Hwan-Joon, Samsung Electronics Co., Ltd., Suwon-si, Gyeonggi-do (KR); Kim, Youn-Sun, Samsung Electronics Co., Ltd., Suwon-si, Gyeonggi-do (KR); Kim, Dong-Hee, Samsung Electronics Co., Ltd., Suwon-si, Gyeonggi-do (KR); Han, Jin-Kyu, Samsung Electronics Co., Ltd., Suwon-si, Gyeonggi-do (KR)
(74) Representative: Grünecker, Kinkeldey, Stockmair & Schwanhäusser Anwaltssozietät

(57) **Abstract**

A method of providing QoS information and controlling reverse transmit power in a mobile communication system is provided. In the mobile communication system, an MS transmits to a BS, packet data on an R-PDCH for a selected one of a plurality of different services, and packet data control information about the packet data on an R-PDCCH. The packet data control information includes QoS information indicating the type of the selected service.

## Description

### BACKGROUND OF THE INVENTION

### 1. Field of the Invention

The present invention relates generally to a reverse link controlling method in a mobile communication system, and in particular, to a reverse link controlling method to provide multimedia service.

### 2. Description of the Related Art

Mobile communication systems were first introduced to provide voice service and afterwards further developed to support low-speed data transmission. Today, growing user demands and the rapid development of mobile communication technologies require mobile communication systems to transmit data at high data rates. The provisioning of high-speed data service brings with it a need for efficient data transmission.

In a mobile communication system, "forward" is defined as a direction from a base station (BS) to a mobile station (MS) and "reverse" as a direction from the MS to the BS. A typical CDMA (Code Division Multiple Access)mobile communication system transmits packet data in PLPs (Physical Layer Packets) on a packet data channel (PDCH) via a radio link. A plurality of services can be involved in reverse packet data service for a single MS. For example, two or more services such as VoIP (Voice on the Internet Protocol), network gaming, video conferencing, FTP (File Transfer Protocol) upload, HTTP, and WAP are simultaneously provided to one MS. The above various services require different QoS (Quality of Service) levels. VoIP, network gaming, and video conferencing are more sensitive to time delay, whereas FTP upload is less sensitive to time delay. Thus, the mobile communication system must be designed efficiently enough to satisfy QoS requirements when a plurality of services are supported for a single MS.

To meet the QoS requirements of multiple services, reverse resources are assigned to them according to the QoS requirements. For example, when multiple services arc provided to one MS, the MS notifies a BS of the amount of data involved in each of the multiple services, The BS then has knowledge of the types and data amounts of the services, and prioritizes the services for scheduling in the manner that gives a higher priority level to a service requiring a higher QoS level, that is, a service sensitive to time delay. The MS, which receives the scheduling information, transmits data on a PDCH if reverse transmission is granted to the MS.

In general, the multi-service communication system allows data retransmission in the physical layer in order to improve throughput. In the physical layer retransmission mechanism, a receiver demodulates a received data packet and transmits an ACK/NACK (Acknowledgement/Non-Acknowledgement) signal from its physical layer, depending on whether the packet has errors or not. The errors are detected usually by a CRC (Cyclic Redundancy Code) check. Upon receipt of the ACK/NACK signal, a transmitter determines whether to retransmit a previously transmitted packet or transmit a new packet in its physical layer.

Typically, the number of transmissions for the same packet in the physical layer is limited. For example, one packet can be transmitted up to three times, including initial transmission and retransmissions. Or the number of transmissions of one packet, including initial transmission and retransmission, can be limited to 2. The maximum number of transmissions is closely related to QoS guarantee. If the maximum transmission number is increased, it implies that time required to transmit one packet successfully increases. Thus, the increase of the maximum transmission number is not suitable for a delay-sensitive service. Accordingly, the maximum transmission number is set to be 2 or less for the delay-sensitive service. On the other hand, despite the increased time delay, the increase of the maximum transmission number advantageously saves energy used to transmit data even at a high rate. As a result, system throughput is improved significantly. In other words, while the packet data channel is transmitted at a high data rate with low energy distributed over a plurality of times, each transmission has a certain success probability, thereby achieving a gain. Therefore, when a plurality of services are simultaneously provided to one MS, the MS transmits each type of packet data with a different maximum transmission number according to the QoS requirement of the packet data.

Meanwhile, power control is essential to the mobile communication system. Thus, the power control must be efficiently managed. One of many power control schemes adopted for the mobile communication systems is known as the outer loop power control. The outer loop power control is implemented as follows in a voice only system.

Upon successful receipt of, for example, a 20-ms voice data frame that has been transmitted from an MS, a BS decreases the set-point of the outer loop power control. If the BS fails to receive the voice data frame from the MS, it increases the set-point. This operation is repeated, to thereby enable the MS to adapt to a varying channel condition. On the other hand, in a system supporting the physical layer retransmission to increase system throughput, the outer loop power control is performed depending on a maximum transmission number, not on the basis of a transport unit. For example, given a maximum transmission number of 3, including initial transmission and retransmissions, if the BS fails to receive a packet successfully after three transmissions of the same packet from the MS, it increases the set-point. If the BS successfully receives at least one of the three transmitted identical packets, it decreases the set-point. The set-point increasing/decreasing procedure is then repeated.

In the mobile communication system described above, when a MS transmits different types of service data having different QoS requirements, it reports the amounts of the service data to the BS and the BS prioritizes the services for scheduling of reverse transmission in order to meet the QoS requirements efficiently, The BS continuously manages information about data transmission amounts by service and by MS for all MSs covered by the BS. When a MS (which the BS has scheduled to transmit) transmits packet data to the BS, the BS ascertains the amount of packet data from control information received together with the packet data. Then the BS updates the data amount of the service corresponding to the packet data, thereby managing data amounts by service and by MS. The update can be carried out by subtracting the amount of currently received data from the previous data amount information.

The MS may help the BS with the efficient scheduling of data by notifying the BS of the amount of buffered data for each service type, while requesting a reverse transmission. However, when the MS transmits packet data on a PDCH, a packet data control channel (PDCCH) transmitted at the same time does not notify the BS of the service type of the packet data.

Therefore, although the BS can schedule reverse transmission in the manner that meets QoS requirements at an initial resources assignment, it does not know the service type of packet data when it actually receives the packet data. Hence, the as cannot efficiently manage the buffered packet data. For example, in the when a MS is video conferencing, while doing FT upload, the FTP upload is not sensitive to time delay, whereas the video conferencing is sensitive to time delay. That is, the video conferencing requires a higher QoS level than the FTP upload. It is assumed here that a maximum transmission number including initial transmission and retransmissions is set to 3 and 2, respectively, for the FTP upload packets, and the video conferencing packets.

The MS and the BS know that the two services are supported, by signaling messages. Since before initiation of the services, information about the services is reported, if the MS has 1000 bytes of FTP data in a buffer, the BS also knows the amount of the buffered FTP data. When 100 bytes of video conferencing packet data arrives at a buffer of the MS, the MS reports the amount of the video conferencing packet data to the BS. The BS then assigns a higher priority level to the MS to transmit because the MS has data with a higher QoS requirement.

If the BS allows the MS to transmit 50 bytes of packet data, the MS transmits 50 bytes of packet data to the BS. However, the BS cannot determine whether the 50-bytes of data are from the video conferencing or from the FTP upload, and thus cannot update or estimate the amounts of the buffered data in the MS. This makes the efficient scheduling of data more difficult to accomplish for the BS. As described earlier, packet data is transmitted secondly and thirdly at the same data rate but at different energy levels. Therefore, the BS cannot identify the service type of the received packet, leading to inefficient scheduling.

As a result, the BS cannot determine whether an outer loop control is to be performed after receiving the packet twice or three times. That is, the existing multimedia service system has limitations in efficient power control.

Meanwhile, the mobile communication system controls data rate as well as power. The data rate and power are controlled together, not alone. Now a description will be made of a data rate control, especially a reverse data rate control.

Reverse data is transmitted in PLPs on a reverse packet data channel (R-PDCH), as described before. Although the duration of each reverse packet frame is fixed, the amount of data in the frame is variable. Hence, the data rate is variable in cach packet and is controlled by a rate control bit (RCB) received from the BS on a forward rate control channel (F-RCCH). The RCB is determined according to the transmit power and total data amount of the BS.

The BS determines the reverse data rates of MSs based on RoT (Rise of Thermal) representing the ratio of the thermal noise to the total received power from all MSs being serviced, or load estimated from the SNRs (Signal to Noise Ratios) of the MSs. If RoT is used as a criterion, the BS controls the data rate of an MS so that the RoT of the MS is approximate to a reference RoT. If the RoT is not available, the BS controls the data rate of the MS so that the load of the MS is approximate to a reference load. Considering the RoT, total data amounts, and transmit power of all the MSs, the BS determines whether to increase, decrease, or maintain the data rates of the individual MSs. Efficient control of the reverse data rates of the MSs can increase total system throughput.

As stated before, the BS transmits reverse data rate control information in the form of an RCB to the MS. If the RCB is +1 indicating rate-up, the MS increases its data rate for the next time slot. If the RCB is -1 indicating rate-down, the MS decreases the data rate for the next time slot. If the RCB is 0 indicating rate-unchange, the MS maintains the current data rate in the next time slot.

A traffic to pilot power ratio (TPR) is preset for each data rate of the R-PDCH between the BS and the MS. A list of TPRs is shown in Table 1 below.

**Table 1**

| Data rate of R-PDCH [kbps] | TPR of R-PDCH [dB] |
|---|---|
| 19.2 | 1.00 |
| 38.4 | 3.75 |
| 76.8 | 6.50 |
| 153.6 | 8.00 |
| 307.2 | 9.00 |
| 460.8 | 10.00 |
| 614.4 | 10.00 |
| 921.6 | 10.00 |
| 1228.8 | 10.00 |

In the present invention, TPR is defined as the ratio of traffic power to pilot power of an MS. Hence, if the BS grants a particular data rate to the MS, the MS carries out reverse traffic transmission at the data rate with a traffic channel gain corresponding to the data rate as illustrated in Table 1.

To describe it in more detail, when the data rate of the MS is set to 153.6kbps, the channel gain is 8.0dB as shown in Table 1. If the BS commands the MS to increase the data rate to 307.2kbps during the data transmission at 153.6kbps, the MS transmits data at the changed data rate, 307.2kbps, on the whole. Referring to Table 1, the channel gain for 307.2kbps is 9.0dB. Thus, at the same time, the MS changes its channel gain to 9.0dB.

In the above case, the BS sets an RCB to +1. The control of reverse traffic transmission in the BS is called scheduling. With scheduling, the BS eventually controls a reverse data rate and a traffic channel gain. Having a table (like Table 1), the BS detects the data rate of each MS and thus calculates its reverse load. In general, reverse data rate control and TPR control are equivalent in the meaning.

It may occur that two or more services having different QoS requirements are provided to one MS. Also, reverse data for each of the services may be generated randomly in the MS. In these cases, the BS does not know the service type of packet data that the MS is to transmit. This makes accurate load calculations impossible, leading to inefficient use of reverse data rate control. Additionally, repeated encounters of the problem degrade QoS and/or overload the BS. Consequently, the BS may be placed in the situation where it cannot provide other services.

### SUMMARY OF THE INVENTION

An object of the present invention is to substantially solve at least the above problems and/or disadvantages and to provide at least the advantages below. Accordingly, an object of the present invention is to provide a method of performing a power control according to the characteristics of multimedia service in a multimedia service mobile communication system.

Another object of the present invention is to provide a method of performing efficient scheduling according to the types of services provided in a multimedia service mobile communication system.

A further object of the present invention is to provide a method of controlling the number of retransmissions according to service types in a multimedia service mobile communication system supporting HARQ (Hybrid Automatic Retransmission reQucst).

Still another object of the present invention is to provide a method and apparatus for efficiently controlling the reverse data rate when two or more services having different QoS requirements are provided to one MS.

Yet another object of the present invention is to provide a reverse data rate controlling method and apparatus for, when two or more services having different QoS requirements are provided to one MS, notifying a BS of the type of transmitted traffic in the MS.

Yet further object of the present invention is to provide a reverse data rate controlling method and apparatus for, when each service has a different TPR, notifying a BS of the type of transmitted traffic in an MS.

Yet still another object of the present invention is to provide a reverse data rate controlling method and apparatus for, when data of each service is generated randomly, notifying a BS of the type of transmitted trade in an MS.

The above objects are achieved by providing a method of providing QoS information of multimedia services and controlling reverse transmit power in a mobile communication system.

According to one aspect of the present invention, in a method of transmitting to a BS packet data on an R-PDCH for a selected one of a plurality of different services, and packet data control information about the packet data on an R-PDCCH, a MS generates the packet data control information including QoS information indicating the type of the selected service, and transmits the packet data control information to the BS on the R-PDCCH.

According to another aspect of the present invention, in a method of transmitting to a BS packet data control information on an R-PDCCH, the packet data control information being control information about packet data on an R-PDCH for a selected one of a plurality of different services, a MS transmits to the BS TPR table information indicating a TPR table selected among a plurality of TPR tables on the R-PDCCH. Here, each of the TPR tables lists TPR values for their respective data rates.

According to a further aspect of the present invention, in a method of receiving packet data control information from a MS on an R-PDCCH, the packet data control information being control information about packet data that the MS transmits on an R-PDCH, a BS receives from the MS TPR table information indicating a TPR table selected by the MS among a plurality of TPR tables on the R-PDCCH. Here, each of the TPR tables lists TPR values for their respective data rates.

According to still another aspect of the present invention, in a scheduling method in a BS that receives from a MS packet data on an R-PDCH and packet data control information on an R-PDCCH, the packet data being for a service selected by the MS among a plurality of different services and the packet data control information being control information about the packet data, the BS updates the transmit power of the MS with the packet data control information received on the R-PDCCH, performs scheduling based on the updated transmit power, and transmits scheduling information related to the scheduling to the MS.

According to yet another aspect of the present invention, in a method of determining the data rate of reverse packet data in a MS, the MS receives rate control information from a BS and determines an authorized TPR. The MS selects one of a plurality of TPR tables, for transmission of packet data, determines a data rate satisfying the given TPR in the selected TPR table, and transmits the packet data at the determined data rate.

### BRIEF DESCRIPTION OF THE DRAWINGS

The above and other objects, features and advantages of the present invention will become more apparent from the following detailed description when taken in conjunction with the accompanying drawings in which:
FIG 1 is a block diagram of a mobile communication system for controlling reverse data rate;
FIG. 2 is a flowchart illustrating an operation for notifying the service types of multimedia service when transmitting packet data according to a preferred embodiment of the present invention;
FIG 3 is a block diagram of a PDCCH transmitter according to the preferred embodiment of the present invention;
FIG 4 is a flowchart illustrating an operation for controlling reverse data rate in an MS according to the preferred embodiment of the present invention; and
FIG 5 is a flowchart illustrating an operation for controlling reverse data rate in a BS according to the preferred embodiment of the present invention.

### DETAILED DESCRIPTION OF THE PREFERRED EMBODIMENTS

Preferred embodiments of the present invention will be described herein below with reference to the accompanying drawings. In the following description, well-known functions or constructions are not described in detail since they would obscure the invention in unnecessary detail.

The present invention will be described hereinbelow regarding operations in a MS and in a mobile communication system when different services are simultaneously provided to the MS in a mobile communication system supporting physical layer retransmission. The operations are about a method of selecting a TPR table according to transmitted reverse service data or its QoS requirement and controlling power and the number of retransmissions, and a method of efficiently controlling a reverse data rate or TPR.

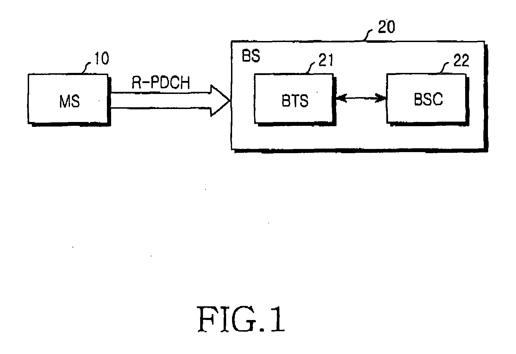

FIG. 1 is a conceptual block diagram of a mobile communication system for controlling reverse power and reverse data rate according to the present invention. The mobile communication system is comprised of a MS 10 and a BS 20. The BS 20 includes a BTS (Base Transceiver System) 21 for exchanging data with the MS 10 wirelessly and a BSC (Base Station Controller) 22 for controlling the BTS 21. Hereinafter, the BTS is interchangeably used with the BS.

When two or more services having different QoS requirements are provided to the MS 10, the BS 20 schedules the next packet for the MS 10 based on the service type, that is, QoS of the current received packet, to thereby control the reverse power and data rate of the MS 10. The reverse power and rate control are performed in the same manner even when each service uses a different TPR and data of each service is generated randomly in the MS 10.

The reverse rate control will first be addressed. The MS 10, upon receipt of reverse rate control information from the BS 20, considers that the reverse rate control information was created based on the TPR of the service type of previous transmitted packet data. The reverse rate control information serves as a criterion for packet data transmission.

Before describing the reverse rate control, assignment of transmit power (TPR) for two or more services having different QoS requirements which are provided to the MS 10 will be described.

Each of the services is controlled to have a different TPR because the services have different QoS requirements including time delay and frame error rate (FER). Two QoS levels can be taken as examples. Some services have a normal QoS because they are less sensitive to real-time transmission or FER. Such services are typical packet data services. Other services require an enhanced QoS, that is, they require real-time transmission and a low FER. In the case where services require these two different QoS requirements, the following TPRs are available and are listed in Table 2. which is shown below.

**Table 2**

| Data rate ofR-PDCH [kbps] | TPR of Service 1 [dB] | TPR of Service 1 [dB] |
|---|---|---|
| 19.2 | 1.00 | 2.76 |
| 38.4 | 3.85 | 5.61 |
| 76.8 | 6.70 | 8.46 |
| 153.6 | 9.40 | 11.16 |
| 307.2 | 12.00 | 13.76 |
| 460.8 | 13.60 | 15.36 |
| 614.4 | 14.40 | 16.16 |
| 921.6 | 16.10 | 17.86 |
| 1228.8 | 17.40 | 19.16 |

When transmitting a PDCH at 153.6kbps, the MS 10 selects a TPR of 9.4dB for service 1 having a normal QoS requirement and a TPR of 11.16dB for service 2 having an enhanced QoS requirement. A TPR-based reverse rate control will be described later in detail.

Now, reverse rate control will be described in brief. The present invention proposes a method of transmitting QoS information on a PDCCH each time packet data is transmitted on a PDCH in the case where a plurality of types of packet data services having different QoS requirements are provided to an MS simultaneously. When a QoS requirement is changed, this implies that a different TPR table can be applied for the packet data transmission. The QoS information indicates the service type of packet data transmitted on the PDCH as illustrated in Table 2, to thereby control traffic power. That is, the MS has a plurality of tables and selects one of them. The MS notifies the BS of the selected table by a QoS bit on the PDCCH.

### A. Reverse Power Control

### First Embodiment

The PDCCH delivers QoS information. More specifically, The PDCCH, which transmits control information required to demodulate packet data on the PDCH simultaneously with the transmission of the packet data, delivers QoS information in a QoS field all the time. Table 3 below tabulates control information on the PDCCH and the numbers of bits for the control information in the typical mobile communication system.

**Table 3**

| Field | Number of bits |
|---|---|
| Data Rate (or EP size) | 4 |
| Subpacket ID | 2 |
| MSIB | 1 |

The control information illustrated in Table 3 depends on system implementation. In Table 3, Data Rate is the data rate of the PDCH. For some systems, EP size is used instead of Data Rate. EP size indicates the number of bits of packet data transmitted on a traffic channel (i.e. the PDCH). Given the duration of one packet, Data Rate is known from EP size. Subpackct ID identifies a subpacket transmitted on the PDCH. From Subpacket ID, the number of retransmissions of specific packet data can be determined. MSIB represents a Mobile Status Indication Bit. It is used by the MS to report to the BS on whether a rate increase is available from the current data rate of the PDCH.

The PDCCH illustrated in Table 4 is modified to include the fields of Table 3, to thereby provide information about packet data transmitted on the PDCH.

**Table 4**

| Field | Number of bits |
|---|---|
| Data Rate (or EP size) | 4 |
| Subpacket ID | 2 |
| MSIB | 1 |
| QoS | 3 |

Table 4 illustrates control information of the PDCCH and the number of bits of the control information according to the embodiment of the present invention. The types and bit numbers of control information are dependent on system implementation. One thing to note in Table 4 is that the PDCCH delivers QoS information according to the present invention. The first embodiment is characterized in that the QoS information is delivered all the time.

Data Rate (EP size), Subpacket ID, and MSIB have the same meanings as those illustrated in Table 3. The additional information, QoS indicates the service type of packet data which is transmitted on the PDCH. Using QoS information, the BS can update it's buffer information listing of MSs by QoS requirements accurately when scheduling. Furthermore, the BS can detect the TPR of the packet data as illustrated in Table 2. That is, the BS can determine whether the MS is to transmit packet data with a given TPR power for first service or for a second service . Hence, the BS can estimate the reverse capacity more accurately. Since the BS can determine the service type of received packet data, it can determine the maximum number of transmissions set for the packet and thus efficiently perform an outer loop power control. Even when only one service is provided to the MS, a plurality of tables can be used. In this case, a maximum number of retransmissions can be predetermined. Consequently, the BS improves reception performance via the PDCH having the QoS information. In the embodiment of the present invention, the QoS information is transmitted all the time. Even if only one service is provided to an MS, the QoS information of the service is continuously transmitted. Needless to say, when two or more multimedia services are provided to the MS, the QoS information indicates the QoS of currently transmitted packet data.

The PDCCH can be so configured as to deliver an ACK/NACK bit with a variable reliability according to the data rate of the PDCCH for the case where different packet data services having different QoS requirements are supported for one MS in the mobile communication system supporting the physical layer retransmission according to the present invention. The reliability is determined according to the service type of packet data as illustrated in Table 2. With this PDCCH configuration, it can be more accurately determined according to the data rate of the packet data whether the packet data has errors or not.

The reliability of the ACK/NACK bit is controlled by changing the transmit power of an ACK channel (ACKCH) delivering the ACK/NACK bit according to the data rate of the PDCH, or changing the number of transmits of the ACK/NACK bit according to the data rate of the PDCH. It is also appreciated that the transmission of the ACK/NACK bit with a variable reliability according to the data rate of the PDCH can occur also in the following second and third embodiments.

### Second Embodiment

The PDCCH, which delivers control information required to demodulate packet data, further includes a QoS field for providing QoS information. Additionally, the number of bits of the QoS field is variable depending on the number of services provided by the BS. Thus, the MS uses a different PDCCH format according to the number of services that are simultaneously supported.

The second embodiment of the present invention will be described with reference to Table 3, Table 5, Table 6, and Table 7. When only one service is provided to the MS, control information is transmitted on a PDCCH configured as illustrated in Table 3. Since the type of traffic is known to the BS and the MS, there is no need for transmitting QoS information.

However, when two services are provided to the MS, the PDCCH is configured to have a 1-bit QoS field as is illustrated in Table 5. If three or four services are provided to the MS, the PDCCH is configured to include a 2-bit QoS field as is illustrated in Table 6. If five services are provided to the MS, the PDCCH is configured to include a 3-bit QoS field as is illustrated in Table 7. It is clearly understood that the names, types, and bit numbers of fields included in the PDCCH can be changed according to the usage of the PDCCH.

**Table 5**

| Field | Number of bits |
|---|---|
| Data Rate (or EP size) | 4 |
| Subpacket ID | 2 |
| MSIB | 1 |
| QoS | 1 |

Table 5 lists PDCCH fields in the case in which two multimedia services are provided to a MS. The QoS field can be expressed using a single bit. For a service having a normal QoS requirement, QoS is set to 0. For a service having an enhanced QoS requirement, QoS is set to 1. Because the meanings of QoS arc already preset between the BS and the MS, the BS determines the service type of received packet data from the QoS field.

Referring to Table 2, the MS has two different TPR tables for two different service types. The TPR table having a lower TPR at the same data rate than the other TPR table is for a normal QoS requirement, and the other TPR table is for an enhanced QoS requirement. For one service, the MS can selectively use different TPR tables.

The BS receives the packet data control information configured as illustrated in Table 5. The BS also has the same TPR tables as those of the MS. The BS receives from the MS TPR table information indicating a selected TPR table as packet data control information in the QoS field. Each TPR table lists a different TPR value for each data rate.

**Table 6**

| Field | Number of bits |
|---|---|
| Data Rate (or EP size) | 4 |
| Subpacket ID | 2 |
| MSIB | 1 |
| QoS | 2 |

Table 6 illustrates the QoS field for the PDCCH in the case of three or four multimedia services. The 2-bit QoS field can represent four QoS requirements. By setting QoS to 00, 01, 10 and 11, service 1 through service 4 can be discriminated from one another. The TPR table illustrated in Table 2 is correspondingly modified to list TPRs for the respective four services. The classification of the service types is possible because the BS and the MS already have knowledge of the QoS requirements of the service types. Therefore, the notification of the service type of packet data on the PDCH enables the BS to perform scheduling efficiently and transmit the ACK/NACK bit on the ACKCH more accurately.

**Table 7**

| Field | Number of bits |
|---|---|
| Data Rate (or EP size) | 4 |
| Subpacket ID | 2 |
| MSIB | 1 |
| QoS | 3 |

Table 7 illustrates the QoS field for the PDCCH in the case of five or more multimedia services. The 3-bit QoS field can represent up to 8 services. Thus, the QoS requirement of the current service provided on the PDCH can be indicated accurately. It is known to those skilled in the art that the number of bits of the QoS field can be further extended to support even more than 8 services. Also, it is clear that as more QoS requirements are classified, the TPR table correspondingly has TPR values set for the respective QoS requirements. For example, if 10 services are provided, a 4-bit QoS field is used and 10 TPRs are set for the same data rate in the TPR table.

### Third Embodiment

A new channel is defined to deliver QoS information. The QoS channel provides information about the service type and QoS requirement of packet data transmitted on the PDCH. The QoS information is configured according to the number of channels established between the BS and the MS. As in the first embodiment of the present invention, the QoS information may be transmitted all the time even when only one service is supported between the BS and the MS. Or as in the second embodiment of the present invention, the QoS information may be formed differently according to the number of services.

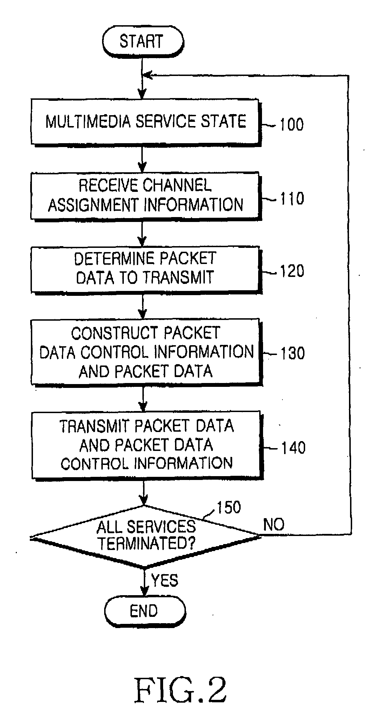

Now the present invention will be described with the attached drawings. FIG. 2 is a flowchart illustrating a control operation for notifying the service type of transmitted packet data in a multimedia service according to the embodiment of the present invention.

The control operation of FIG. 2 is about transmission of a QoS field from the MS 10 to the BS 20. The MS 10, having a plurality of TPR tables, selects one of the TPR tables, generates packet data control information including TPR table information indicating the selected TPR table, and transmits the packet data control information to the BS 20 on the PDCCH. This procedure will be described in more detail with reference to FIG 2.

Referring to FIG. 2, the control operation is performed during the multimedia service in progress. That is, two or more services are being provided in step 100. The MS 10 receives channel assignment information from the BS 20 at a predetermined interval in the multimedia service state in step 110. Resource assignment information, TPR assignment information, mobile transmit power assignment information, or scheduling information is received as the channel. assignment information. The channel assignment information is periodically received, or once a channel is assigned by scheduling, the assigned channel is continuously used. In the embodiment of the present invention, the channel assignment information is received at predetermined intervals, for example, 10ms. The interval can be set to 1.25ms, 5ms, or 20ms. As described above, the channel assignment information can be received only once. In this case, step 110 occurs only once. The following description is made in the context of periodic transmission of channel assignment information.

After receiving the channel assignment information at the predetermined interval, the MS 10 determines packet data to transmit in step 120. Since simultaneous transmission of the two services is excluded from the description, the packet data is originated from one service and transmitted on the channel assigned in step 110. The determination as to which packet data to transmit is made according to QoS. Packet data requiring real-time transmission has the highest priority level. An urgent message also has a high priority level. Determining the packet data to transmit according to service priority levels, the MS 10 constructs control information about the packet data in one of the methods embodied as the first through embodiments of the present invention, and then forms PLPs being transport units according to the data rate of the assigned channel, in step 130.

In step 140, the MS 10 transmits the packet data and control information on predetermined channels.. The transmit power of the packet data is different for different service types as illustrated in Table 2. The packet data control information is delivered on the PDCCH in the first or second embodiment, or on the new channel in the third embodiment. Depending on system implementation, one of the first through third embodiments is selected. Or all of the embodiments are employed and the BS 10 chooses one of them according to circumstances. In the latter case, there is no need for presetting one of the three methods between the MS 10 and the BS 20.

Upon completion of the service, the MS determines whether all the services have been completed in step 150. If they have been completed, the MS 10 terminates the multimedia service. On the contrary, if the services are not completed, the MS repeats steps 110 through 150 at the predetermined interval, for example, 10ms.

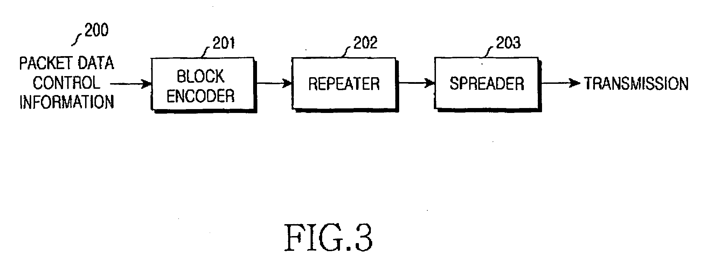

FIG. 3 is a block diagram of a PDCCH transmitter according to the preferred embodiment of the present invention. The configuration and operation of the PDCCH transmitter will now be described with reference to FIG. 3.

Referring to FIG. 3, reference numeral 200 denotes the packet data control information constructed in step 130 of FIG. 2. A block encoder 201 block-encodes the packet data control information 200 and a repeater 202 repeats the block-coded data a predetermined number of times. A spreader 203 spreads the repeated data. The spread signal is transmitted on the PDCCH after upconversion to an RF signal.

### B. Reverse Rate Control

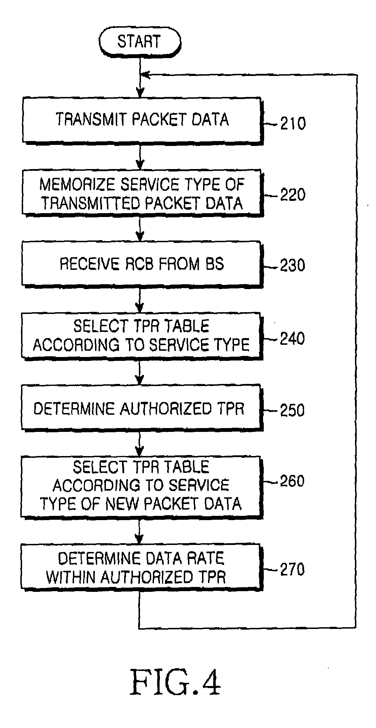

FIG. 4 is a flowchart illustrating an operation for controlling reverse data rate in an MS according to the preferred embodiment of the present invention.

Referring to FIG. 4, it is assumed that multimedia data of a plurality of service types is transmitted. When the MS 10 needs to transmit packet data of a particular service type, it transmits the packet data to the BS 20 on the R-PDCH in step 210, and memorizes the service type of the transmitted packet data in step 220. As described with reference to Table 2, Table 5, Table 6 and Table 7, the MS 10 must know the service type of the transmitted packet data. In step 230, the MS 10 receives reverse rate control information, for example, an RCB from the BS. The MS 10 then selects a TPR table like Table 2 suitable for the service type of the packet data in step 240. The MS 10 then determines an authorized TPR according to the received RCB referring to the selected TPR table in step 250. That is, the MS 10 determines a TPR value for the next packet data according to a data rate assigned for the R-PDCH. In step 260, the MS 10 selects a TPR table suitable for the service type of the next packet data. The MS 10 then determines a data rate within the authorised TPR in the TPR table in step 270. This operation will be described in more detail referring to Table 2, taking an example.

If the service type of the packet data transmitted in step 210 is service 1, the data rate is 153.6kbps, and the RCB received in step 230 is +1, the MS 10 determines the authorized TPR to be 12dB referring to Table 2 and then checks the service type of the next packet data. If the next packet data is from service 2, the MS 10 searches TPR values under service 2in the third column. Because the authorized TPR is 12dB, a maximum data rate within 12dB is 153.kbps with a TPR of 11.16dB. Therefore, the MS 10 transmits the packet data of service 2 at or below 153.5kbps to the BS 20.

While the data rate of a new service is determined within an authorized TPR in the above-described embodiment, in alternative embodiments a data rate having a TPR most approximate to the authorized TPR is selected for the new service.

In accordance with the second embodiment of the present invention, if the service type of the packet data transmitted in step 210 is service 1 and the data rate is 921.6kbps, the MS 10 determines the authorized. TPR to be 16.10dB. If the next packet data is from service 2, as compared to the first embodiment where the MS 10 selects a data rate equal to or lower than 460.8kbps having a TPR of 15.36dB less than the authorized TPR, the MS 10 can select a data rate having a TPR more approximate to the authorized TPR. For example, the MS 10 selects 614.4kbps with a TPR of 16.16dB rather than 460.8kbps with a TPR of 15.36dB because 16.16dB is more approximate to the authorized TPR, 16.10dB than 15.36dB.

An operation for processing packet data received from the MS to control the reverse data rate of the MS in the BS will be described below.

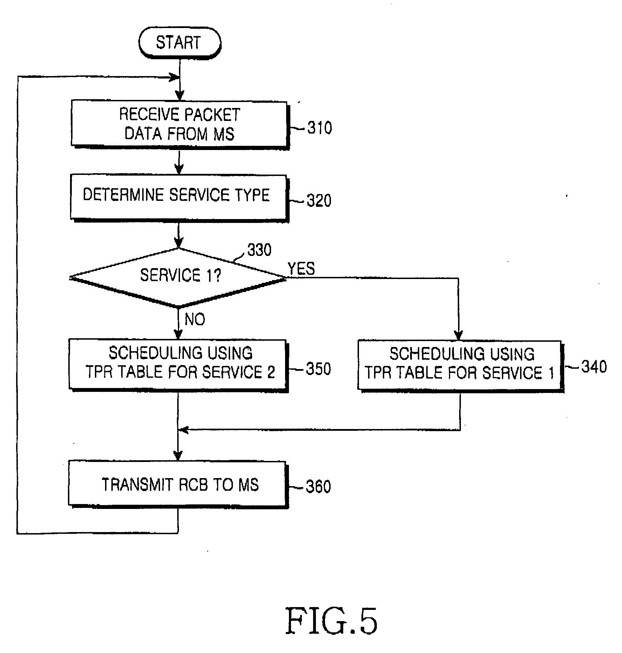

FIG. 5 is a flowchart illustrating an operation for controlling reverse data rate in the BS according to the preferred embodiment of the present invention.

The BS 20 transmits rate control information to the MS 10. The MS 10 then transmits packet data at a controlled data rate (as illustrated in FIG. 4). At the same time, it transmits to the BS a QoS bit indicating a selected TPR table among a plurality of TPR tables on the PDCCH. The BS 20 then performs scheduling for the MS 10 based on the information of the received PDCCH. This operation is depicted in detail in FIG 5.

Referring to FIG. 5, the BS 20 receives packet data on the R-PDCH from the MS 10 in step 310. At the same time, the BS 20 receives the R-PDCCH from the MS, The R-PDCCH contains a QoS field and the data rate of the packet data. The QoS field indicates the TPR of packet data that the MS 10 transmitted. Therefore, the BS 20 can determine the transmit power of the packet data using the QoS field and the packet data rate. The received information is used in subsequent scheduling of the BS 20. The BS 20 then determines the service type of the packet data by one of the methods embodied in the first through third embodiments in step 320. In step 330, the BS 20 determines whether the service type is service 1. In the case of service 1, the BS 20 performs scheduling using a TPR table defined for service 1 in step 340 and proceeds to step 360.

In the case of service 2, the BS 20 performs scheduling using a TPR table defined for service 1 in step 340 and proceeds to step 360. In step 360, the BS 20 transmits to the MS 10 the scheduling result containing an RCB for controlling the data rate for the next packet data. Then, the BS 20 returns to step 310.

While the embodiments of the present invention have been described in the case where two services having different QoS requirements are provided to one MS, they are merely exemplary applications. Therefore, the present invention is also applicable when three or more services having different QoS requirements are provided to one MS.

In accordance with the present invention as described above, different power control schemes arc carried out according to the types of services when a multimedia service is provided in a mobile communication system. Therefore, a BS can perform scheduling easily, manage received data continuously, determine the number of physical layer retransmissions according to the type of serviced data, and effectively perform an outer loop power control.

Furthermore, when two or more services having different QoS requirements are provided to one MS, the MS selects a TPR for the next packet transmission based on the previous TPR and determines the reverse data rate based on the selected TPR. Then, the MS reports the reverse data rate to the BS. Thus, the BS can calculate load accurately, which makes efficient reverse rate control possible. Also, even when each service uses a different TPR and data of each service arrives randomly at the MS, the present invention offers the above-described benefits.

While the invention has been shown and described with reference to certain preferred embodiments thereof, it will be understood by those skilled in the art that various changes in form and detail may be made therein without departing from the spirit and scope of the invention as defined by the appended claims.

## Claims

1. A method in a mobile station (MS) of transmitting to a base station (BS) packet data on a reverse packet data channel (R-PDCH) and packet data control information on a reverse packet data control channel (R-PDCCH), the packet data being delivered for a service selected by the MS among a plurality of different services and the packet data control information being used for demodulation of the packet data, the method comprising the steps of:
generating the packet data control information including quality of service (QoS) information indicating the type of the service selected; and
transmitting the packet data control information to the BS on the R-PDCCH.

2. The method of claim 1, wherein the packet data control information further includes a data rate or an encoder packet (EP) size, a subpacket ID, and a mobile status indication bit (MSIB).

3. The method of claim 1, wherein the transmission step comprises the step of transmitting the R-PDCH and the R-PDCCH simultaneously.

4. A method in a mobile station (MS) of transmitting packet data control information to a base station (BS) on a reverse packet data control channel (R-PDCCH), the packet data control information being control information for packet data transmitted on a reverse packet data channel (R-PDCH) from the MS, the method comprising the step of:
transmitting to the BS a traffic to pilot power ratio (TPR) table information indicating a TPR table selected among a plurality of TPR tables on the R-PDCCH,
wherein each of the TPR tables lists TPR values for respective data rates.

5. The method of claim 4, wherein the transmission step comprises the step of transmitting the R-PDCH and the R-PDCCH simultaneously.

6. The method of claim 4, further comprising the step of selecting a data rate and a TPR value within a maximum transmit power allowed by the BS and transmitting the packet data at the data rate and the TPR value.

7. The method of claim 4, wherein the packet data control information further includes a data rate or encoder packet (EP) size of the packet data, a subpacket ID, and a mobile status indication bit (MSIB).

8. The method of claim 4, wherein the selected TPR table is one of either a TPR table for a normal quality of service (QoS) and a TPR table for an enhanced QoS.

9. The method of claim 4, wherein the transmission step comprises the step of transmitting the TPR table information in a QoS field of the R-PDCCH.

10. The method of claim 4, wherein the transmission step comprises the steps of:
selecting the TPR table from among the plurality of TPR tables;
generating the packet data control information including the TPR table information indicating the TPR table selected among a plurality of TPR tables; and
transmitting the packet data control information on the R-PDCCH.

11. A method in a base station (BS) of receiving packet data control information from a mobile station (MS) on a reverse packet data control channel (R-PDCCH), the packet data control information being control information about packet data that the MS transmits on a reverse packet data channel (R-PDCH), the method comprising the step of:
receiving from the MS a traffic to pilot power ratio (TPR) table information indicating a TPR table selected by the MS from among a plurality of TPR tables on the R-PDCCH,
wherein each of the TPR tables lists TPR values for respective data rates.

12. The method of claim 11, wherein the reception step comprises the step of receiving information on the R-PDCH and the R-PDCCH simultaneously.

13. The method of claim 11, further comprising the step of receiving the packet data at a data rate and TPR that the MS selects within a maximum transmit power allowed by the BS from the selected TPR table.

14. The method of claim 11, wherein the packet data control information further includes a data rate or encoder packet (EP) size of the packet data, a subpacket ID , and a mobile status indication bit (MSIB).

15. The method of claim 11, wherein the selected TPR table is one of either a TPR table for a normal quality of service (QoS) and a TPR table for an enhanced QoS.

16. The method of claim 11, wherein the reception step comprises the step of receiving the TPR table information in a QoS field of the R-PDCCH.

17. A scheduling method in a base station (BS) that receives from a mobile station (MS) packet data on a reverse packet data channel (R-PDCH) and packet data control information on a reverse packet data control channel (R-PDCCH), the packet data being for a service selected by the MS from among a plurality of different services and the packet data control information being control information about the packet data, the method comprising the steps of:
updating the transmit power of the MS with the packet data control information received on the R-PDCCH; and
performing scheduling based on the updated transmit power and transmitting scheduling information related to the scheduling to the MS.

18. The scheduling method of claim 17, wherein the packet data control information includes information about the data rate of the packet data and traffic to pilot power ratio (TPR) table information indicating a specific TPR table has been selected by the MS.

19. The scheduling method of claim 17, wherein the packet data control information includes buffer information of the packet data, for scheduling.

20. The scheduling method of claim 17, further comprising the steps of:
detecting a maximum transmission number corresponding to the service type of the received packet data. if the packet data has errors;
performing an outer loop power control for the MS according to the maximum retransmission number; and
transmitting an outer loop power control result together with the scheduling information to the MS.

21. The scheduling method of claim 17, further comprising the steps of:
checking errors in the received packet data and determining the reliability of an ACK (Acknowledgement) channel (ACKCH) according to the service type of the packet data; and
generating an ACK/NACK (Acknowlcdgemen/Non-Acknowledgement) message according to the determined reliability of the ACKCH; and transmitting the ACK/NACK message to the MS on the ACKCH.

22. The scheduling method of claim 21, wherein a maximum transmission number of the ACK/NACK message is determined according to the reliability of the ACK/NACK message.

23. The scheduling method of claim 21, wherein the transmit power of the ACK/NACK message is determined according to the determined reliability of the ACK/NACK message.

24. A method of determining the data rate of reverse packet data in a mobile station (MS), comprising the steps of:
receiving rate control information from a base station (BS) and determining an authorized traffic to pilot power ratio (TPR);
selecting one of a plurality of TPR tables, for transmission of packet data;
determining a data rate satisfying the authorized TPR in the selected TPR table; and
transmitting the packet data at the determined data rate.

25. The method of claim 24, wherein the authorized TPR determining step comprises the step of determining the authorized TPR in a preselected TPR table according to the received rate control information.

26. The method of claim 24, wherein the TPR of the determined data rate is the highest TPR which is still lower than the authorized TPR.

27. The method of claim 24, wherein the TPR of the determined data rate is most substantially equal to the authorized TPR.

28. The method of claim 24, wherein the determined data rate corresponds to a TPR less than or equal to the authorized TPR in the selected TPR table.

29. The method of claim 24, further comprising the step of transmitting TPR table information indicating the selected TPR table on a reverse packet data control channel (R-PDCCH).

30. The method of claim 29, wherein the TPR table information transmitting step further comprises the step of transmitting the TPR table information in a quality of service (QoS) field of the R-PDCCH.

31. A method scheduling reverse packet data in a base station (BS), comprising the steps of:
transmitting rate control information to a mobile station (MS);
receiving from the MS a reverse packet data control channel (R-PDCCH) including traffic to pilot power ratio (TPR) table information indicating a TPR table selected by the MS among a plurality of TPR tables; and
performing scheduling based on the TPR table information.
